# EUROPÄISCHE PATENTANMELDUNG

(11) **EP 0 849 480 A2**
(43) Veröffentlichungstag der Anmeldung: **24.06.1998**
(21) Anmeldenummer: 97890248.4
(22) Anmeldetag: 16.12.1997
(51) Int. Cl.: F16C 3/02, B63H 23/34

(54) **Hohlwelle für den Wellenstrang eines Schiffsantriebes**

(30) Priorität: 19.12.1996 AT 2223/96
(71) Anmelder: Dr. Ing. Geislinger & Co. Schwingungstechnik Gesellschaft m.b.H., 5300 Hallwang/Salzburg (AT)
(72) Erfinder: Pfeifer, Peter, Dipl.-Ing., 5020 Salzburg (AT)
(74) Vertreter: Hübscher, Heiner, Dipl.-Ing.

(57) **Zusammenfassung**

Eine Hohlwelle für den Wellenstrang eines Schiffsantriebes weist ein Wellenrohr aus tragender Laminat, insbesondere faserverstärktem Epoxidharz, auf. Um auf rationelle Weise eine hohe Feuerbeständigkeit zu erreichen, ist das Wellenrohr mit einer unmittelbar auf das Laminat aufgebrachten Schutzhülle aus brandbeständigem Material versehen und dem Wellenstrang zumindest im Längenbereich dieses Wellenrohres eine Kühleinrichtung, vorzugsweise eine Wasserberieselungsanlage zugeordnet.

## Beschreibung

Die Erfindung bezieht sich auf eine Hohlwelle für den Wellenstrang eines Schiffsantriebes mit einem Wellenrohr aus tragendem Laminat, insbesondere faserverstärktem Epoxidharz.

Aus Sicherheitsgründen gibt es für Passagierschiffe die Forderung, daß das Schiff auch bei Ausbruch eines Feuers in irgendeinem Raum noch aus eigener Kraft einen Nothafen erreichen können muß, was als erfüllt angesehen wird, wenn die Antriebsanlage, insbesondere der Wellenstrang dieser Antriebsanlage, zumindest 60 Minuten lang Feuerwiderstand leistet und in dieser Zeit die erforderliche Momentenübertragung gewährleistet. Führt der Wellenstrang aus dem Motorenraum auch noch durch andere Maschinenräume, müssen wenigstens die diesen Räumen zugehörenden Wellenabschnitte entsprechend feuergeschützt werden, damit die Forderung erfüllbar ist. Beim Einsatz von Stahlwellen gelingt dies verhältnismäßig einfach, doch ergeben sich bei der Verwendung von Hohlwellen aus faserverstärktem Kunststoff, wie sie aus Gewichtsgründen immer häufiger eingesetzt werden, beträchtliche Schwierigkeiten, da diese Wellen wegen der erforderlichen Festigkeitseigenschaften aus faserverstärktem Epoxidharz oder anderen tragenden Laminaten hergestellt sind, welche Kunststoffe in ihrem unmodifizierten chemischen Aufbau keine ausreichende Feuer- bzw. Hitzebeständigkeit aufweisen. Die bisher verwendeten Kunststoffe sind gut brennbar bzw. entwickeln unter Hitzeeinwirkung gut brennbare Gase, so daß sie bereits nach kurzer Zeit im Brandfalle ihre strukturelle Festigkeit verlieren und nicht den geforderten Feuerwiderstand mit sich bringen. Es muß daher bisher für eine Einkapselung bzw. Tunnelführung der gefährdeten Wellenstrangabschnitte gesorgt werden, was allerdings aufwendig, platzraubend und nicht zuletzt gewichtsbelastend ist und daher nicht befriedigen kann.

Der Erfindung liegt daher die Aufgabe zugrunde, diese Mängel zu beseitigen und eine Hohlwelle der eingangs geschilderten Art zu schaffen, die auf rationelle Weise die Einhaltung der Sicherheitsbedingungen für den Brandfall gewährleistet.

Die Erfindung löst diese Aufgabe dadurch, daß das Wellenrohr eine unmittelbar auf das Laminat aufgebrachte Schutzhülle aus brandbeständigem Material aufweist und dem Wellenstrang zumindest im Längenbereich dieses Wellenrohres eine Kühleinrichtung, vorzugsweise eine Wasserberieselungsanlage zugeordnet ist. Diese Schutzhülle läßt sich mit wenig Mehraufwand im Zuge der Wellenrohrherstellung aufbringen und schirmt das feuergefährdete tragende Laminat des Wellenrohres gegen eine Feuer- und Hitzeeinwirkung so lange ab, bis die vorgesehene Kühleinrichtung aktiviert ist und von sich aus den weiteren Hitze- und Brandschutz der Hohlwelle übernimmt. Die Schutzhülle muß daher nicht für einen mindestens 60 minütigen Feuerwiderstand sorgen, sondern dient gewissermaßen als Überbrückungshilfe für die den erforderlichen Feuerschutz bietenden Kühleinrichtung, die vorzugsweise als Wasserberieselungsanlge oder eine andere Feuerbekämpfungsanlage ausgebildet ist. Da das Epoxidharz des tragenden Laminats bei längerer Hitzeeinwirkung auch ohne Flammenentwicklung durch eine Strukturaufweichung die Fähigkeit der Drehmomentenübertragung verliert und die Schutzhülle zwar die Feuereinwirkung, nicht aber die Hitzeeinwirkung über längere Zeit aufhalten kann, ist eine entsprechende Kühleinrichtung notwendig, die aber alleine wegen der vorhandenen Ansprech- und Aktivierungszeit unzureichend wäre und daher nur in Kombination mit der Schutzhülle den erforderlichen Feuerwiderstand bietet. Dadurch lassen sich auf rationelle und aufwandsarme Weise die geforderten Sicherheitsbedingungen einhalten, was die Voraussetzung bietet, Kunststoffwellen mit all ihren Vorteilen auch für Schiffsantriebe praxistauglich zu machen.

Da die Schutzhülle keine tragende Aufgabe zu übernehmen hat, sondern lediglich die ausreichenden isolierenden und feuerbeständigen Eigenschaften zeigen muß, sind verschiedene Materialien für die Schutzhüllenherstellung einsetzbar. Zweckmäßigerweise ist die Schutzhülle allerdings aus einem Phenolharzprepreg mit Glasfasergewebe, aus einem Epoxidharzprepreg, das aus mit einem brandbeständig modifizierten Epoxidharz imprägnierten Glas- oder Keramikfasern besteht oder aus einem imprägnierten Abstandsgewebe mit geschlossener Außenoberfläche hergestellt. Diese Prepregs oder Abstandsgewebe können unmittelbar anschließend an den Herstellungsvorgang auf das Wellenrohr aufgebracht werden, so daß bei einfachem Beschichten des Wellenrohres gleichzeitig auch eine gute Haftbarkeit der Schutzhülle am Laminat des Wellenrohres gewährleistet wird und die Welle dann in üblicher Weise weiterverarbeitet werden kann. Phenolharz ist ein an sich bekannter unbrennbarer Kunststoff hoher Sprödigkeit, der sich bestens als Brandschutzhülle auch für Hohlwellen eignet. Epoxidharze müssen entsprechend modifiziert sein, um die erforderliche Brandbeständigkeit zu erreichen, wobei eine chemische oder physikalische Modifikation möglich ist. Bei der chemischen Modifikation werden meist Halogene in das Epoxidharz eingebaut oder Verschnitte mit anderen Harzen durchgeführt und bei der physikalischen Modifikation kommt es zu einer Beimengung von unbrennbaren Zuschlagstoffen, die aber neben der Verbesserung der Brandbeständigkeit auch eine Verschlechterung der mechanischen Eigenschaften mit sich bringen. Abstandsgewebe wiederum sind dreidimensionale Gewebe bzw. Gestricke von sandwichartigem Aufbau und bestehen aus zwei Deckschichten, die mit querverlaufenden Fäden vemäht sind. Nach dem Aushärten des Imprägnierharzes entsteht eine leichte Sandwichstruktur, deren Kernschicht im wesentlichen einen Luftpolster bildet, womit diese Abstandsgewebe auch eine gute Wärmeisolierung bieten.

Durch die erfindungsgemäße Maßnahme, das Wellenrohr einer Kunststoffwelle mit einer brandbeständigen Schutzhülle zu versehen und dem gefährdeten Wellenstrangabschnitt zusätzlich eine Kühleinrichtung zuzuordnen, läßt sich verhältnismäßig einfach und aufwandsarm auch bei Einsatz von Wellen aus brennbarem Material ein hoher Feuerwiderstand erreichen, der den Einsatz dieser Kunststoffwellen vor allem auch im Passagierschiffbau ermöglicht.

## Patentansprüche

1. Hohlwelle für den Wellenstrang eines Schiffsantriebes mit einem Wellenrohr aus tragendem Laminat, insbesondere faserverstärktem Epoxidharz, dadurch gekennzeichnet, daß das Wellenrohr eine unmittelbar auf das Laminat aufgebrachte Schutzhülle aus brandbeständigem Material aufweist und dem Wellenstrang zumindest im Längenbereich dieses Wellenrohres eine Kühleinrichtung, vorzugsweise eine Wasserberieselungsanlage zugeordnet ist.

2. Hohlwelle nach Anspruch 1, dadurch gekennzeichnet, daß die Schutzhülle aus einem Phenolharzprepreg mit Glasfasergewebe hergestellt ist.

3. Hohlwelle nach Anspruch 1, dadurch gekennzeichnet, daß die Schutzhülle aus einem Epoxidharzprepreg hergestellt ist, das aus mit einem brandbeständig modifizierten Epoxidharz imprägnierten Glas- oder Keramikfasern besteht.

4. Hohlwelle nach Anspruch 1, dadurch gekennzeichnet, daß die Schutzhülle aus einem imprägnierten Abstandsgewebe mit geschlossener Außenoberfläche hergestellt ist.
